# DEMANDE DE BREVET EUROPEEN

(11) **EP 3 648 208 A1**
(43) Date de publication de la demande: **06.05.2020**
(21) Numéro de dépôt: 19203589.7
(22) Date de dépôt: 16.10.2019
(51) Int. Cl.: H01M 4/134, H01M 4/40, H01M 4/62, H01M 4/66, H01M 10/052, H01M 10/0563, H01M 4/02

(54) **PILE À CATHODE LIQUIDE COMPRENANT UNE ANODE À BASE D'UN ALLIAGE DE LITHIUM SPÉCIFIQUE**

(30) Priorité: 29.10.2018 FR 1860012
(71) Demandeur: Commissariat à l'énergie atomique et aux énergies alternatives, 75015 Paris (FR)
(72) Inventeur: CHAVILLON, Benoît, 38054 GRENOBLE CEDEX 09 (FR); INVERNIZZI, Ronan, 38054 GRENOBLE CEDEX 09 (FR); MAYOUSSE, Eric, 38054 GRENOBLE CEDEX 09 (FR)
(74) Mandataire: Brevalex

(57) **Abrégé**

L'invention a trait à une pile comprenant une anode, une cathode constituée d'une matrice imprégnée par un matériau actif liquide, qui est un solvant oxydant soufré et/ou phosphoré, l'anode et la cathode étant séparées l'une de l'autre par un électrolyte comprenant au moins un sel et un solvant, qui est de nature identique au matériau actif liquide, caractérisée en ce que l'anode comprend, comme matériau actif, un alliage de lithium et de calcium.

## Description

### DOMAINE TECHNIQUE

La présente invention a trait à une pile à cathode liquide comprenant une anode à base d'un alliage de lithium spécifique.

Comme mentionné ci-dessus, les piles de l'invention reposent sur la technologie des piles à cathode liquide, ce qui signifie, en d'autres termes, qu'elles reposent sur la particularité que le matériau actif utilisé à la cathode est un composé liquide, qui remplit également le rôle de solvant de l'électrolyte, ce matériau actif imprégnant classiquement une matrice carbonée poreuse.

Un des modèles phares de ce type de pile est la pile lithium-chlorure de thionyle, qui se compose classiquement des éléments suivants :
- une électrode négative (ou anode) en lithium métallique, où se produit l'oxydation du lithium selon la réaction suivante :

   Li → Li⁺ + e⁻
- une électrode positive (ou cathode) comprenant, généralement, une matrice, généralement carbonée, piégeant le matériau actif liquide (d'où l'appellation de cathode liquide), en l'occurrence, du chlorure de thionyle, qui est réduit selon la réaction suivante :

   2 SOCl₂ + 4e⁻ → S + SO₂ + 4Cl⁻
- un électrolyte disposé entre ladite électrode négative et ladite électrode positive, lequel électrolyte comporte, comme solvant, du chlorure de thionyle, au moins un sel (plus spécifiquement, un sel de lithium, tel que LiAlCl₄ ou LiGaCl₄) et éventuellement un ou plusieurs additifs pour contrôler la formation de la couche de passivation du lithium et contrôler l'autodécharge de la pile ;
- l'électrode négative et l'électrode positive étant reliées à un circuit extérieur, qui réceptionne le courant électrique produit *via* les électrodes susmentionnées.

En combinant la réaction électrochimique à l'électrode positive et la réaction électrochimique à l'électrode négative, la réaction globale (dite de décharge) peut être schématisée par l'équation suivante :

4 Li + 2SOCl₂ → S + SO₂ (partiellement dissous) + 4LiCl (précipité)

les produits de la réaction étant ainsi du soufre, partiellement soluble dans l'électrolyte, du gaz SO₂, qui se solubilise partiellement dans l'électrolyte et un sel chlorure de lithium LiCl, qui précipite et forme un réseau continu dans la matrice constitutive de l'électrode positive. Le chlorure de lithium étant un matériau cristallin, il se réorganise progressivement dans la matrice, afin d'en occuper l'espace vide, la matrice constituant ainsi une zone de récupération des produits de réaction.

Le lithium métallique, qui constitue classiquement, le matériau actif de l'électrode négative, est un matériau utilisable dans la plupart des systèmes tant son énergie massique et volumique est importante. En effet, le lithium présente une densité de 0,534 g/cm³ et une énergie massique de 3861 mAh/g ainsi qu'une densité d'énergie volumique de 2061 mAh/cm³. Ces valeurs restent très élevées par rapport à celles obtenues avec d'autres matériaux d'électrode négative, notamment grâce à la réaction Li → Li⁺ + e⁻, cette réaction impliquant l'échange d'un seul électron par atome de lithium, lequel est très léger et générant ainsi une quantité d'énergie importante pour un faible rapport volume/masse.

Si, du point de vue de leurs caractéristiques électrochimiques, les piles Li/SOCl₂ présentent un certain nombre d'avantages (par exemple, une tension thermodynamique de 3,64 V par cellule en se basant sur la variation d'enthalpie libre due à la réaction globale de décharge susmentionnée ; une énergie massique théorique élevée de 1470 Wh/kg (de l'ordre de 5273 kJ/kg) ; un phénomène d'autodécharge très faible (évalué à 1 % de perte de capacité par an à une température de 20 °C) ; une température de fonctionnement s'échelonnant de -60 °C (limitation imposée par l'électrolyte) à 180 °C (limitation imposée par le lithium métallique) ; une pression interne faible, du fait que les produits de réactions gazeux, tels que SO₂, sont solubles, en partie, dans l'électrolyte), ce système présente aussi un certain nombre d'inconvénients, en raison notamment de la réactivité du lithium métallique avec l'humidité de l'air ou de l'eau, pour former de l'hydrogène et de la lithine LiOH avec production de chaleur. Qui plus est, il se forme une couche de passivation à la surface du lithium (cette couche comprenant du LiCl), ce qui peut occasionner une chute de tension lors d'un appel de courant.

Comme suggéré ci-dessus, l'utilisation de ce système est théoriquement limitée à une température de 180 °C, point de fusion du lithium au-delà duquel des courts-circuits se produisent pouvant générer un emballement thermique et une surpression de la pile, pouvant conduire à sa destruction.

Par ailleurs, un autre inconvénient lié à l'utilisation du lithium est lié à la formation éventuelle de dendrites de lithium, lors des processus de charge répétés, qui peuvent court-circuiter l'accumulateur.

Enfin, l'utilisation du lithium peut présenter des difficultés de manipulation pour la fabrication des électrodes négatives. En effet, le lithium présente une capacité d'adhérence sur tous types de métaux ou alliages, tels que l'inox, l'acier voire même sur certains polymères fluorés. Ainsi, il peut s'avérer difficile à manipuler et à mettre en forme, par exemple, par laminage ou extrusion sauf à prendre des précautions particulières, notamment en travaillant sous atmosphère neutre et dénuée d'humidité et/ou en travaillant avec des outils revêtus d'une couche de polymère non réactif, tel que du polyéthylène basse densité. Enfin, pour une utilisation dans des piles à cathode liquide, il peut être intéressant d'utiliser pour constituer l'électrode négative des feuillards de lithium très fins, par exemple, d'une épaisseur allant de 10 à 50 µm en vue notamment d'augmenter la densité de puissance. Toutefois, une telle épaisseur est impossible à atteindre avec des laminoirs standards et lorsque de tels feuillards sont disponibles dans le commerce, ils sont très onéreux, même lorsqu'ils sont déjà prélaminés sur des collecteurs de courant (par exemple, un feuillard de cuivre).

Au regard de ce qui existe, les auteurs de la présente invention se sont fixé pour objectif de mettre en place un nouveau type de pile à cathode liquide qui permette de bénéficier des avantages inhérents à l'utilisation du lithium pour la constitution de l'électrode négative tout en limitant les inconvénients, notamment ceux relatifs à la difficulté de manipulation de lithium pour réaliser des électrodes négatives de faibles épaisseurs.

### EXPOSÉ DE L'INVENTION

Aussi, l'invention a trait à une pile comprenant une anode, une cathode constituée d'une matrice imprégnée par un matériau actif liquide, qui est un solvant oxydant soufré et/ou phosphoré, l'anode et la cathode étant séparées l'une de l'autre par un électrolyte comprenant au moins un sel et un solvant, qui est de nature identique au matériau actif liquide, caractérisée en ce que l'anode comprend, comme matériau actif, un alliage de lithium et de calcium, l'alliage de lithium et de calcium étant, de préférence, un alliage de lithium comportant du calcium à hauteur de 2 à 34% atomique.

Avant d'entrer plus en détail dans l'exposé de l'invention, nous précisons les définitions suivantes.

Par cathode, on entend, classiquement, dans ce qui précède et ce qui suit, l'électrode qui est le siège d'une réaction de réduction, en l'occurrence, ici, la réduction du matériau actif liquide, quand la pile débite du courant, c'est-à-dire lorsqu'elle est en processus de décharge. La cathode peut être également qualifiée d'électrode positive.

Par anode, on entend, classiquement, dans ce qui précède et ce qui suit, l'électrode qui est le siège d'une réaction d'oxydation, quand la pile débite du courant, c'est-à-dire lorsqu'elle est en processus de décharge. L'anode peut être également qualifiée d'électrode négative.

Par matériau actif de la cathode, on entend, classiquement, dans ce qui précède et ce qui suit, le matériau qui est directement impliqué dans la réaction de réduction se déroulant au niveau de la cathode, ce matériau actif étant un matériau liquide, qui est un solvant oxydant soufré et/ou phosphoré (d'où l'appellation de pile à cathode liquide parfois utilisée pour désigner ce type de pile, où le matériau actif est un liquide, qui se trouve être, dans notre cas de figure, de nature identique au solvant de l'électrolyte).

Par matériau actif de l'anode, on entend, classiquement, dans ce qui précède et ce qui suit, le matériau qui est directement impliqué dans la réaction d'oxydation se déroulant au niveau de l'anode, ce matériau actif étant, dans le cadre de cette invention, l'alliage de lithium et de calcium tel que mentionné ci-dessus.

L'anode comportant un tel matériau actif peut être facilement préparée par lamination et présenter des épaisseurs faibles compatibles pour obtenir une amélioration de la densité de puissance.

Plus spécifiquement, l'anode peut être constituée uniquement du matériau actif, qui est l'alliage de lithium et de calcium tel que mentionné ci-dessus.

D'un point de vue structural, l'anode peut se présenter sous forme d'une feuille ou plaque présentant une épaisseur allant de 5 à 200 µm, plus spécifiquement de 20 à 100 µm.

Avantageusement, l'alliage de lithium et de calcium constitutif du matériau actif de l'anode est un alliage comportant exclusivement du lithium et du calcium.

Plus spécifiquement, l'alliage de lithium et de calcium peut être, de préférence, un alliage de lithium comportant du calcium à hauteur de 2 à 34% atomique (ce qui signifie, en d'autres termes, que, lorsque l'alliage comporte exclusivement du lithium et du calcium, le lithium est présent, dans l'alliage, à hauteur de 66 à 98% atomique), de préférence, de 2 à 15% atomique (ce qui signifie, en d'autres termes, que, lorsque l'alliage comporte exclusivement du lithium et du calcium, le lithium est présent, dans l'alliage, à hauteur de 85 à 98% atomique).

Le calcium dans l'alliage de lithium et de calcium peut se présenter, en tout ou partie, sous forme de CaLi₂. Dans ce dernier cas, l'alliage de lithium et de calcium peut être considéré comme étant un matériau comprenant une matrice en lithium dont tout ou partie du calcium se trouve sous forme d'inclusions de CaLi₂ dans la matrice en lithium. Les auteurs de la présente invention ont pu mettre en évidence qu'un tel alliage se lamine facilement et présente de bonnes propriétés mécaniques notamment en termes de résistance à la traction, notamment pour des épaisseurs telles que définies ci-dessus.

Par % atomique, on entend, classiquement, dans ce qui précède et ce qui suit, le rapport correspondant au rapport du (nombre total d'atomes de calcium/nombre total d'atomes de l'alliage)^{∗}100.

Avantageusement, l'anode peut être autosupportée, c'est-à-dire qu'elle ne nécessite pas d'être apposée sur un support pour être utilisée dans la pile de l'invention et, plus spécifiquement, qu'elle ne nécessite pas d'être apposée sur un collecteur de courant (ce qui signifie, autrement dit, que la pile est dénuée de collecteur de courant au niveau de l'électrode négative). En variante, elle peut être associée à un support, par exemple, du type collecteur de courant, qui peut être un feuillard ou une grille en au moins un élément métallique conducteur de l'électricité, tel que du cuivre, du nickel, de l'aluminium, de l'inox.

La matrice imprégnée par un matériau actif liquide est, avantageusement, une matrice comprenant (voire constituée d') un matériau choisi parmi les noirs de carbone, les noirs d'acétylène, du graphite (en particulier, de la poudre de graphite), les fibres de carbone (en particulier, les fibres de carbone obtenues en phase vapeur connues sous l'abréviation VGCF), les nanotubes de carbone, du titane (en particulier, sous forme de poudre), du nickel (en particulier, sous forme de poudre ou de mousse), du molybdène (en particulier, sous forme d'un matériau massif, tel qu'une feuille ou plaque) et les mélanges de ceux-ci. Plus spécifiquement, la matrice est, avantageusement, constituée, en tout ou partie et, de préférence, majoritairement (c'est-à-dire à une teneur d'au moins 50% massique), d'un matériau carboné à haute surface spécifique (c'est-à-dire une surface spécifique au moins égale à 50 m².g⁻¹), tel que, par exemple, du noir d'acétylène.

En outre, la matrice peut comprendre un liant organique, tel qu'un liant polymérique, par exemple, fluoré (par exemple, du polytétrafluoroéthylène), pour permettre d'assurer la tenue de la cathode, ce liant pouvant être présent, à hauteur de 3 à 30% en masse de la masse totale de la matrice.

En particulier, la matrice peut se présenter sous forme d'un papier, d'une mousse, d'un tissé ou non-tissé de carbone, et plus spécifiquement de fibres de carbone ou peut se présenter sous forme d'une mousse de nickel ou d'un feuillard ou plaque de molybdène.

Par ailleurs, la matrice peut présenter une épaisseur allant de 0,5 à 5 mm et, plus précisément, de 0,5 à 2 mm, notamment, lorsque la pile présente un format C.

A titre d'exemple, la matrice imprégnée par un matériau actif liquide est une matrice comprenant (voire est constituée de) du noir d'acétylène et un liant organique, tel qu'un liant polymérique, comme du polytétrafluoroéthylène.

La matrice peut être associée à un substrat collecteur de courant, ce substrat pouvant être en un matériau métallique (composé d'un seul élément métallique, par exemple, du nickel, du titane ou du tantale ou d'un alliage d'un élément métallique avec un autre élément, par exemple, de l'acier inoxydable), se présentant, par exemple, sous forme d'une plaque, d'un feuillard ou d'une grille, présentant, par exemple, une épaisseur allant de 10 à 500 µm, un exemple spécifique d'un substrat collecteur en courant pouvant être une grille en nickel.

Le matériau actif liquide imprégnant la matrice est un solvant oxydant soufré et/ou phosphoré, lequel fait également office de solvant d'électrolyte.

Plus spécifiquement, le solvant oxydant soufré et/ou phosphoré faisant office de matériau actif liquide et également de solvant d'électrolyte peut être :
- un solvant soufré, comprenant un ou plusieurs atomes de chlore, tel qu'un solvant choisi parmi le chlorure de thionyle (SOCl₂), le chlorure de sulfuryle (SO₂Cl₂), le dichlorure de disoufre (S₂Cl₂) ou le dichlorure de soufre (SCl₂) ;
- un solvant soufré non chloré, tel que le dioxyde de soufre (SO₂) ; ou
- un solvant phosphoré et éventuellement soufré comprenant un ou plusieurs atomes de chlore, tel que le trichlorure de phosphoryle (POCl₃), le trichlorure de thiophosphoryle (PSCl₃).

De préférence, le solvant oxydant est du chlorure de thionyle (SOCl₂).

Les piles de l'invention comprennent également un électrolyte occupant l'espace inter-électrodes entre l'anode et la cathode, l'électrolyte comprenant un solvant oxydant soufré et/ou phosphoré identique au matériau actif liquide de la cathode et comprenant, en outre, au moins un sel.

Le sel présent dans l'électrolyte peut résulter de la réaction d'un acide de Lewis et d'une base de Lewis, cette réaction pouvant avoir lieu *ex situ,* c'est-à-dire avant l'introduction dans la pile ou *in situ,* c'est-à-dire au sein de la pile, lorsque l'acide de Lewis et la base de Lewis correspondants sont introduits dans la pile.

Plus précisément, le sel peut être réalisé par réaction :
- d'une base de Lewis de formule A¹X₂, dans laquelle X représente un atome d'halogène, tel qu'un atome de chlore, un atome de brome, un atome de fluor, un atome d'iode, et A¹ représente un élément divalent, tel qu'un élément alcalino-terreux comme Ca et Sr (par exemple, SrCl₂, CaCl₂), de formule A²X, dans laquelle X est tel que défini ci-dessus et A² représente un élément monovalent, tel qu'un élément alcalin comme Na, Li (par exemple, NaCl, LiCl) ou un groupe ammonium NH₄⁺ (par exemple, NH₄Cl), de formule A³X₃, dans laquelle X est tel que défini ci-dessus et A³ représente un élément trivalent tel que Ba (par exemple, BaCl₃) ; et
- d'un acide de Lewis choisi parmi un halogénure d'aluminium AlX₃ (par exemple, AlCl₃), un halogénure de gallium GaX₃ (par exemple, GaCl₃), un halogénure de bore BX₃ (par exemple, BCl₃), un halogénure d'indium InX₃ (par exemple, InCl₃), un halogénure de vanadium VX₃ (par exemple, VCl₃), un halogénure de silicium SiX₄ (par exemple, SiCl₄), un halogénure de niobium NbXs (par exemple, NbCl₅), un halogénure de tantale TaXs (par exemple, TaCl₅), un halogénure de tungstène WX₅ (par exemple, WCl₅), un halogénure de bismuth BiX₃ (par exemple, BiCl₃), des borohydrures, des chloroborates et les mélanges de ceux-ci, X représentant, comme ci-dessus, un atome d'halogène tel qu'un atome de brome, un atome de chlore, un atome de fluor et un atome d'iode.

De préférence, l'acide de Lewis est (AlCl₃) ou (GaCl₃) et la base de Lewis est SrCl₂, notamment lorsque le solvant oxydant utilisé est le chlorure de thionyle.

Outre la présence d'un solvant et d'un sel tel que défini ci-dessus, l'électrolyte peut comprendre un ou plusieurs additifs choisis, par exemple, pour limiter l'autodécharge des piles et la corrosion en décharge.

Ce et ces additifs peuvent être choisis parmi l'acide fluorhydrique HF, l'acide chlorosulfurique HSO₃Cl, SO₂, des sels tels que GaCl₃, BiCl₃, BCl₃, GaCl₃, InCl₃, VCl₃, SiCl₄, NbCl₅, TaCl₅, PCl₅ et WCl₆.

Ce et ces additifs peuvent être présents en une teneur allant de 0 à 50% de la concentration du sel.

L'électrolyte peut être amené à imprégner un ou plusieurs séparateurs.

Le ou les séparateurs sont, de préférence, neutres, isolants et stables chimiquement vis-à-vis de l'électrolyte utilisé et peuvent permettre d'éviter les court-circuits dans la pile. Ils peuvent être, par exemple, en papier ou en un tissé de fibres de verre et peuvent présenter une épaisseur allant de 20 à 500 µm.

L'anode et la cathode sont placées, avantageusement, dans une enceinte fermée (pouvant être qualifiée également de container), l'enceinte pouvant former une enveloppe disposée autour de l'une des électrodes et en contact direct avec celle-ci *via* une de ses faces, l'électrode en contact direct avec l'enveloppe pouvant être l'anode, lorsque celle-ci constitue l'électrode périphérique ou la cathode, lorsque celle-ci constitue l'électrode périphérique.

Plus spécifiquement, lorsque l'anode et la cathode présentent une géométrie cylindrique et présentant le même axe cylindrique, l'enceinte peut se présenter sous forme d'une enveloppe cylindrique creuse comportant une surface cylindrique et deux faces planes opposées l'une à l'autre (respectivement une face plane inférieure et une face plane supérieure) et ladite enceinte présentant un axe de révolution identique à celui de l'anode et de la cathode, la surface cylindrique de l'enveloppe étant en contact direct avec la cathode ou l'anode (soit, en d'autres termes, l'enceinte forme, via sa surface cylindrique, une enveloppe autour de la cathode ou de l'anode et est en contact avec celle-ci).

En particulier, la face plane inférieure peut former une même pièce avec la surface cylindrique, tandis que la face plane supérieure peut être constituée par une pièce distincte soudée à la surface cylindrique, ladite pièce étant conductrice de l'électricité, telle qu'une pièce comportant du verre et du métal (plus spécifiquement, une traversée étanche, laquelle pièce peut, avantageusement, permettre d'établir le contact électrique avec l'électrode cylindrique centrale (à savoir, l'anode ou la cathode).

Les piles de l'invention peuvent, en outre, être adaptées à différents types de formats, tels que les formats AAA, AA, C et D.

Les piles de l'invention peut être utilisées, de manière sûre, à une température allant de -60°C à +120°C.

Les piles de l'invention peuvent être réalisées par des techniques classiques à la portée de l'homme du métier, par exemple, par montage des différents éléments constitutifs de l'accumulateur (à savoir, anode, cathode et électrode), ce montage pouvant être maintenu dans un boîtier. L'alliage constitutif de l'électrode négative peut être réalisé par fusion de lithium et de calcium, par exemple, sur une plaque chauffante, à une température pouvant aller de 140 à 500°C, sous une atmosphère neutre (par exemple, une atmosphère d'argon) suivie, après mélange, d'une trempe du mélange fondu pour former rapidement l'alliage. L'alliage ainsi obtenu peut être mis sous forme d'une plaque ou feuille par laminage en vue d'entrer dans la constitution de l'électrode négative.

L'invention va, à présent, être décrite en référence aux modes de réalisation particuliers définis ci-dessous et en référence aux figures annexées.

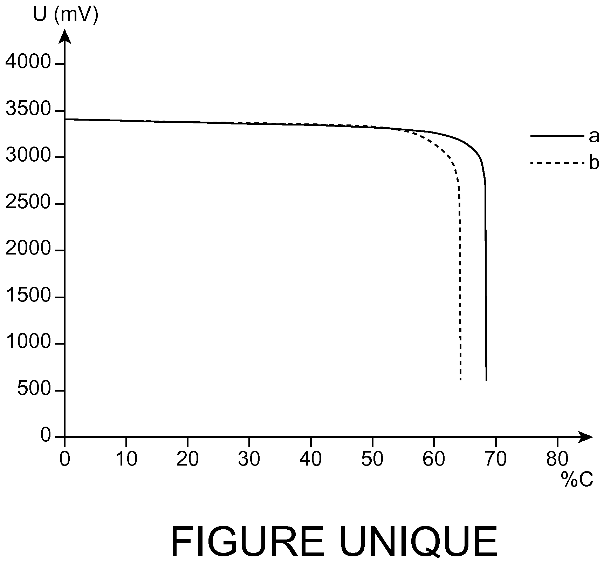

### BRÈVE DESCRIPTION DE LA FIGURE UNIQUE

La figure unique est un graphique illustrant l'évolution de la tension de pile U (en mV) en fonction du pourcentage de capacité initiale %C à courant constant (10 mA) et à 20 °C (respectivement courbe a) pour la pile conforme à l'invention et courbe b) pour la pile non conforme à l'invention).

### EXPOSÉ DÉTAILLÉ D'UN MODE DE RÉALISATION PARTICULIER

### EXEMPLE

Le but de cet exemple est de démontrer les performances d'une pile conforme à l'invention en termes de maintien de la capacité en comparaison d'une pile non conforme à l'invention.

La pile conforme à l'invention est une pile de format AA comportant les éléments suivants :
- une électrode négative constituée d'une couche d'alliage de lithium et de calcium (à hauteur de 2% atomique) de dimensions 30^{∗}35 mm, cette électrode négative étant laminée sur un collecteur de courant, qui est une grille de nickel expansé présentant une épaisseur de 300 µm et de dimensions 28^{∗}33 mm ;
- une électrode positive constituée d'un mélange de noir d'acétylène (75% massique) et de polytétrafluoroéthylène (25% massique), ce mélange formant une couche de 0,4 mm d'épaisseur, ladite couche étant déposée de part et d'autre d'un collecteur de courant, qui est une grille de nickel présentant une épaisseur de 300 µm de dimensions 30^{∗}25 mm, l'ensemble étant enroulé au centre de la pile, l'ensemble présentant une épaisseur de 1,1 mm et une surface de 7 cm² ;
- un godet cylindrique en Inox 304 présentant une épaisseur de 200 µm, un diamètre interne de 12 mm et une hauteur de 50 mm et présentant une surface de 10 cm², formant une enveloppe autour de l'anode qui est en contact direct avec lui *via* sa surface cylindrique interne ;
- un électrolyte liquide présentant un volume de 4,5 mL comprenant du chlorure de thionyle, un sel LiAlCl₄ (0,8 M) et du SO₂ (0,3 M).

La pile non conforme à l'invention est similaire à celle définie ci-dessus si ce n'est que l'électrode négative est en lithium métallique et non en un alliage de lithium et de calcium.

Pour ces deux piles, il est déterminé l'évolution de la tension de pile U (en mV) en fonction du pourcentage de capacité initiale %C à courant constant (10 mA) et à 20 °C, les résultats étant reportés sur la figure unique jointe en annexe (respectivement courbe a) pour la pile conforme à l'invention et courbe b) pour la pile non conforme à l'invention).

Il ressort qu'il n'y a pas de différence de tension de plateau entre la pile conforme à l'invention et la pile non conforme à l'invention, ce qui démontre que l'électrode comprenant du calcium est aussi fonctionnelle qu'une électrode de lithium dans un tel système.

En outre, la présence de calcium dans l'alliage de lithium constitutif de l'électrode négative contribue à rendre l'alliage plus facile à laminer que du lithium pur, ce qui permet d'envisager l'utilisation d'un tel alliage pour constituer des électrodes négatives plus fines et ainsi des surfaces développées plus importantes, ce qui peut s'avérer un atout majeur dans les piles destinées à des applications de puissance.

## Revendications

1. Pile comprenant une anode, une cathode constituée d'une matrice imprégnée par un matériau actif liquide, qui est un solvant oxydant soufré et/ou phosphoré, l'anode et la cathode étant séparées l'une de l'autre par un électrolyte comprenant au moins un sel et un solvant, qui est de nature identique au matériau actif liquide, **caractérisée en ce que** l'anode comprend, comme matériau actif, un alliage de lithium et de calcium, l'alliage de lithium et de calcium étant un alliage de lithium comportant du calcium à hauteur de 2 à 34% atomique.

2. Pile selon la revendication 1, dans laquelle l'anode est constituée uniquement du matériau actif, qui est l'alliage de lithium et de calcium.

3. Pile selon la revendication 1 ou 2, dans laquelle l'anode se présente sous forme d'une feuille ou plaque présentant une épaisseur allant de 5 à 200 µm.

4. Pile selon l'une quelconque des revendications précédentes, dans laquelle l'alliage de lithium et de calcium comporte exclusivement du lithium et du calcium.

5. Pile selon l'une quelconque des revendications précédentes, dans laquelle l'alliage de lithium et de calcium est un alliage de lithium comportant du calcium à hauteur de 2 à 15% atomique.

6. Pile selon l'une quelconque des revendications précédentes, dans laquelle le calcium dans l'alliage de lithium et de calcium se présente, en tout ou partie, sous forme de CaLi₂.

7. Pile selon l'une quelconque des revendications précédentes, dans laquelle l'anode est autosupportée.

8. Pile selon l'une quelconque des revendications précédentes, dans laquelle la matrice imprégnée d'un matériau actif liquide est une matrice comprenant un matériau choisi parmi les noirs de carbone, les noirs d'acétylène, du graphite, les fibres de carbone, les nanotubes de carbone, du titane, du nickel, du molybdène et les mélanges de ceux-ci.

9. Pile selon l'une quelconque des revendications précédentes, dans laquelle la matrice imprégnée d'un matériau actif liquide est une matrice comprenant du noir d'acétylène.

10. Pile selon l'une quelconque des revendications précédentes, dans laquelle la matrice imprégnée d'un matériau actif liquide comprend, en outre, un liant organique, tel qu'un liant polymérique.

11. Pile selon l'une quelconque des revendications précédentes, dans laquelle le solvant oxydant soufré et/ou phosphoré est :
- un solvant soufré, comprenant un ou plusieurs atomes de chlore, tel qu'un solvant choisi parmi le chlorure de thionyle (SOCl₂), le chlorure de sulfuryle (SO₂Cl₂), le dichlorure de disoufre (S₂Cl₂) ou le dichlorure de soufre (SCl₂) ;
- un solvant soufré non chloré, tel que le dioxyde de soufre (SO₂) ; ou
- un solvant phosphoré et éventuellement soufré comprenant un ou plusieurs atomes de chlore, tel que le trichlorure de phosphoryle (POCl₃), le trichlorure de thiophosphoryle (PSCl₃).

12. Pile selon l'une quelconque des revendications précédentes, dans laquelle le solvant oxydant est du chlorure de thionyle.
